**Europäisches Patentamt**

**European Patent Office**

**Office européen des brevets**

(11) Publication number : **0 271 986 B1**

# EUROPEAN PATENT SPECIFICATION

(45) Date of publication of patent specification :
**28.09.94 Bulletin 94/39**

(51) Int. Cl.⁵ : **G06F 11/16, G06F 11/30**

(21) Application number : **87309698.6**

(22) Date of filing : **03.11.87**

(54) **Data processing system having a hierarchy of service computer.**

(30) Priority : **19.12.86 US 944549**

(43) Date of publication of application :
**22.06.88 Bulletin 88/25**

(45) Publication of the grant of the patent :
**28.09.94 Bulletin 94/39**

(84) Designated Contracting States :
**DE FR GB IT**

(56) References cited :
**EP-A- 0 031 501**
**EP-A- 0 157 036**
**US-A- 3 623 011**
**US-A- 3 786 430**
**US-A- 4 244 019**

(73) Proprietor : **AMDAHL CORPORATION**
**1250 East Arques Avenue**
**Sunnyvale California 94086 (US)**

(72) Inventor : **Wilson, Chris, J.**
**131 Saratoga Avenue**
**3315 Santa Clara California 95051 (US)**
Inventor : **Blau, Robert**
**6 Primrose Lane**
**Rigby Idaho 83442 (US)**

(74) Representative : **Crawford, Andrew Birkby et al**
**A.A. THORNTON & CO.**
**Northumberland House**
**303-306 High Holborn**
**London WC1V 7LE (GB)**

EP 0 271 986 B1

## Description

The present invention relates to the field of digital computers and specifically to a number of computers connected together to form a data processing system.

In data processing systems, control functions are typically implemented using a sequence or stream of instructions called a program where the intructions are sequentially executed to carry out desired data manipulations. In the execution of instructions, the computer utilizes many circuit locations which are set or reset to logical states of 1 or 0 as a function of the operation of the computer. These locations include, for example, registers and memory for storing data, control information, and instructions. As each instruction is executed by the computer, the different circuit locations within the computer assume either logical 1 or logical 0 values as a function of the program execution. The inputs and/or outputs from these locations within the computer are generally referred to as the direct (non-redundant) inputs and/or outputs whenever those inputs or outputs have values which in some way are determined directly as a function of the execution of the program by the computer. The circuit locations within a computer are connected by direct (non-redundant) data paths and control paths which are utilized in support of the execution of the program.

At times it is desirable to have a second or other computers examine or control the logical states of locations within a first computer. One manner of performing such examination or control is to stop the operation of the first computer and allow the second computer to utilize the direct (non-redundant) data and control paths of the first computer. Such operation, however, terminates or slows down of execution of the primary programs by the first computer while the second computer executes an alternate instruction stream. If a first computer has an error condition, then frequently that error condition will not only interfere with the execution of the first and primary program by the first computer, but will also interfere with the alternate any attempt by the second computer to determine the source of the error if the second computer utilizes the same circuit connections and paths as the first computer.

In order to avoid the use of the same circuit connections and paths in a computer, some computers have been provided with redundant input and/or output connections and paths to locations within a computer and have provided redundant accessing means for accessing locations through the redundant input and/or output connections and paths. Such a redundant system is described in U.S. Patent 4,244,019 entitled "DATA PROCESSING SYSTEM INCLUDING A PROGRAM-EXECUTING SECONDARY SYSTEM CONTROLLING A PROGRAM-EXECUTING PRIMARY SYSTEM".

Prior art systems such as the one Patent 4,244,019 have provided methods and apparatus for controlling the operation of one computer by another computer in a data processing system in response to human intervention for maintenance or other reasons. Such methods and apparatus have not provided the flexibility and efficiency which is desirable for more efficient data processing systems.

In U.S. Patent 4,244,019 the data processing system is formed with a first (primary) computer and with a second (secondary) computer. The first computer has instruction execution and processing apparatus operable to execute a first program formed as a first instruction stream. The second computer has instruction execution and processing apparatus for executing a second program formed as a second instruction stream. The second computer is typically a console which is capable, through its own program, to cause the execution of intructions and commands in the first data processing system and to cause the accessing of locations in the first data processing system using redundant connections and paths.

The primary function of the overall computer system in Patent 4,244,019 is to execute the first (primary) programs in the first computer and the function of the second computer is to assist, control and interrogate the first computer.

Computers from time to time experience errors. In a system of connected computers, such as in Patent 4,244,019, errors in one computer can cause delays in the operation of the other computers in the system thereby interfering with the primary function of the overall computer system. When a computer experiences an error, the typical operation is to suspend execution of the instruction stream for that computer so as to not cause any further errors. In a system, the suspension of operation of a second computer may slow down or stop the operation of a first computer, even when no errors exist in the first computer. When computers have been stopped, it is important to diagnose the problem and restart the computers for error free operation as quickly as possible. The diagnosis usually involves the scan-out and analysis of the state of many circuit locations in the stopped computer. The restarting of the stopped computer commences typically by an initial program loading (IPL) routine.

IPL routines for computers are well known. Typically, an IPL routine initiates the starting and distribution of clock signals, the resetting and clearing of many locations throughout a computer to establish initial conditions, and the downloading of control or other information and programs from disk or other memory. Each IPL routine is tailored to the particular computer which is being started or restarted.

The manual initiation of diagnosis and initial program loading for the restarting of a computer is often inefficient and interferes with or slows down the execution of primary programs in a primary computer. The inefficiency is particularly aggravated in a hierarchical system in which a second computer is controlling a first computer. If the second computer experiences errors, when the first computer is not, the second computer errors frequently interfere with the operation of the first computer thereby degrading the primary function of the overall system, that is, execution of programs by the primary computer.

In accordance with the above background, there is a need for an improved hierarchy of computers whereby operations of each of the computers leads to a more efficient overall system.

SUMMARY OF THE INVENTION

The present invention is a data processing system having a hierarchy of computers including a first computer, a second computer, and a third computer. Typically, the first computer is a general-purpose, large-scale computer and the second computer is a smaller-scale general-purpose support computer for performing certain support operations in connection with the first computer.

Each of the first and second computers executes an independent instruction stream. The instruction stream for the first computer causes data manipulations with circuit locations associated with the principal function of the overall data processing system, namely, the execution of first programs in the first computer.

The instruction stream executing in the second computer performs support functions which assist and control the first computer and acts as an interface between the first computer and a human operator through a console including a terminal having a keyboard and a display.

The first computer includes first circuit locations having redundant connections independently accessible by the second computer under control of the second instruction stream and independent of the first instruction stream.

A third computer is provided for executing a third instruction stream. The third instruction stream and the third computer perform support functions which assist and control the operation of the second computer. The second computer includes second circuits having redundant connections independently accessible by the third computer under control of the third instruction stream.

Whenever the second computer has an error or other conditions which stop the execution of the second program by the second computer, the third computer sense the second locations in the second computer and automatically scans out and restarts the second computer, for example, by causing an intial program load (IPL) routine to be executed for the second computer. In this manner, the second computer is restarted automatically under control of the third instruction stream executed by the third computer, without requiring interruption of the processing of a first program in the first computer.

In accordance with the above summary, the objective of providing a data processing system formed of three or more computers with improved reliability and efficiency is achieved.

The foregoing and other objects, features and advantages of the invention will be apparent from the following detailed description in conjunction with the drawings.

BRIEF DESCRIPTION OF THE DRAWINGS

FIG. 1 depicts a block diagram of a computer system including first, second and third computers in accordance with the present invention.

FIG. 2 depicts a block diagram of the first and second computers of the FIG. 1 system.

FIG. 3 depicts a block diagram of the independently accessible and redundantly connected locations and the scanner for accessing those locations within the second computer of FIG. 2.

FIG. 4 depicts a block diagram of the third computer of the FIG. 1 system.

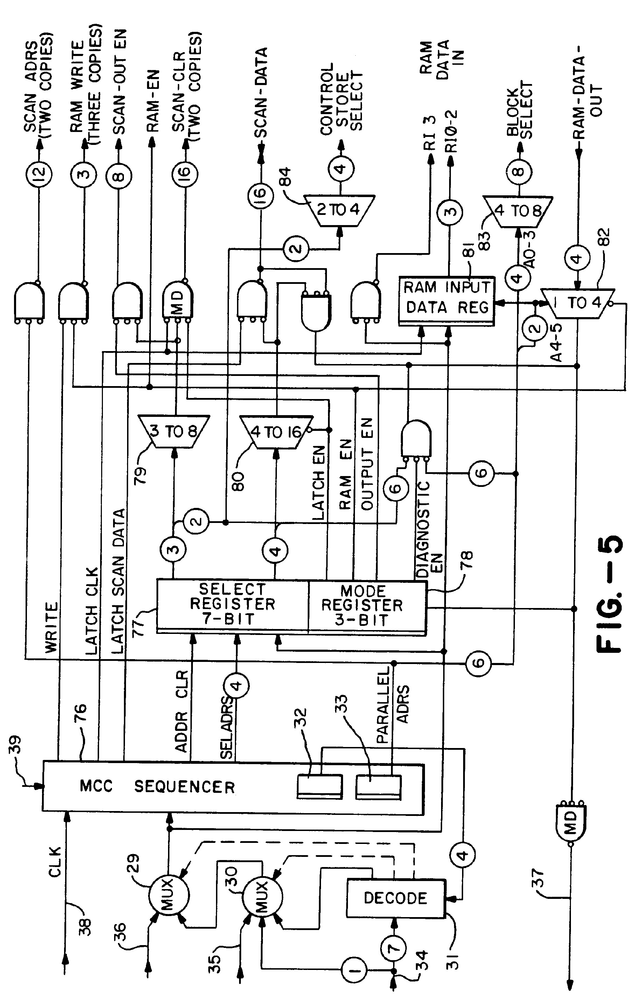

FIG. 5 depicts a block diagram of the scanner which forms part of the FIG. 3 circuitry.

FIG. 6 depicts a block diagram of a latch circuit which has independently accessible redundant inputs and outputs.

DETAILED DESCRIPTION OF THE DRAWINGS

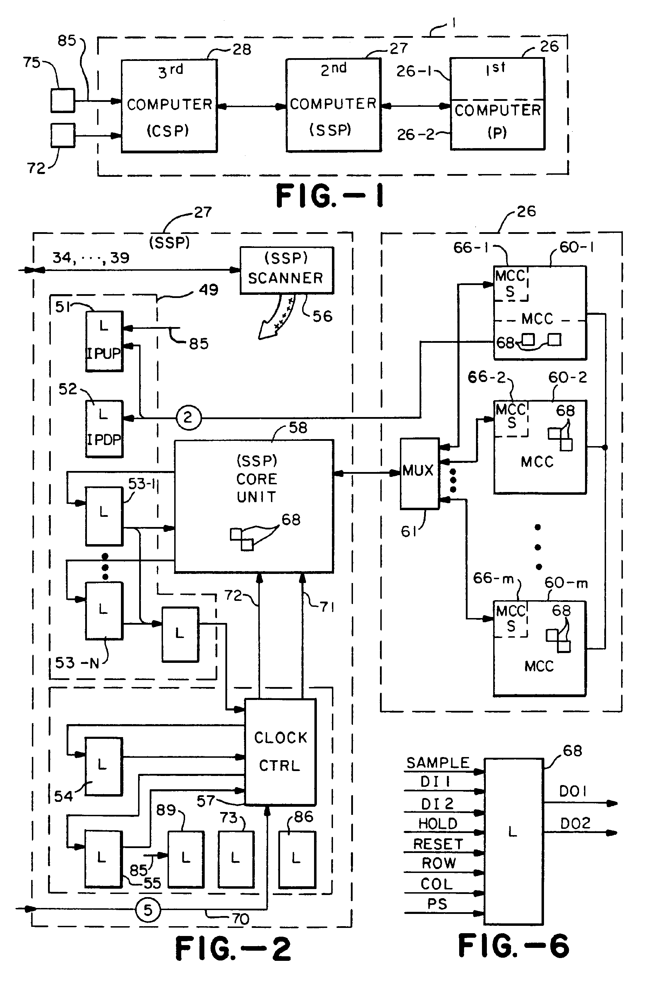

System With Computer Hierarchy - FIG. 1.

In FIG. 1, a first computer 26, a second computer 27 and a third computer 28 are shown. The computer 26 is a conventioal large-scale computer which runs in a conventional manner under control of an operating system and executes a primary (first) program formed as a first instruction stream.

In FIG. 1, the second computer 27 executes a second program, formed as second instruction stream. Additionally, in FIG. 1 a third computer 28 executes a third program, formed as a third instruction stream, independently of the second instruction stream in a second computer 27 and independently of the first instruction stream in first computer 26.

The first computer 26 and the second computer 27 include scan-in and scan-out apparatus and operate generally in the manner described in the above-identified United States Patent 4,244,019. The third computer 28 performs functions to assist, control and monitor the second computer 27. In FIG. 1, the system 1 hierarchy is formed with the largest computer being the first computer 26, the next largest computer being the second computer 27 and the next largest computer being the third computer 28. Each computer in the hierarchy includes means for independently executing a different instruction stream. The first computer includes redundantly connected and independently accessible first locations accessible by the second computer under control of the second instruction stream. The second computer includes redundantly connected and independently accessible second locations accessible by the third computer under control of the third instruction stream.

Primary and Secondary Computer Systems - FIG. 2.

In FIG. 2, a primary and secondary computer system of the type described in the above-identified U.S. patent 4,244,019 is shown. The primary or first computer 26 has hardware components including circuit locations 68 which are organized in physical blocks 60-1, 60-2, ..., 60-M. Typically, each block 60 is a multiple chip carrier (MCC) which carries a number of large-scale integrated (LSI) semi-conductor chips. The semi-conductor chips include circuits having latches and memory locations which are directly interconnected to form a high-speed, large-scale computer. Many or all of the latches and other data locations within the first computer 26 include redundantly connected and independently accessible data inputs and/or outputs and control inputs and/or outputs which are independently accessible under control of the second computer 27. These redundantly connected inputs and/or outputs in the first computer 26 are in addition to the normal direct inputs and outputs of the circuits employed in connection with the primary operation of the first computer.

A typical circuit location in the form of a latch circuit 68 is depicted. The latch circuit 68 includes a direct data input, DI1, and a redundant data input, DI2. Latch 68 has a direct data output, DO1, and a redundant output, DO2. The SAMPLE, HOLD, and RESET signals are conventional control signals useful in the operation of the typical latch 68. In addition, latch 68 is addressable by independent addressing circuitry including the ROW, COL, and PS lines. These independently addressable inputs control the redundant inputs and outputs of the latch 68 separately from the use that the latch 68 has in the first computer 26 or in the second computer 27. The latch 68 of FIG. 6 is like that shown in FIG. 7 of the cross-referenced application EP-A-0157036 entitled "SERIAL CHIP SCAN."

The primary operation of the first computer 26 is to support the execution of primary (first) programs in a first stream of instructions. Such primary programs carry out conventional computer operations including executing application programs for accounting, data processing, inventory control, data base management and so on. All of these primary functions are carried out independently of the redundantly connected data and control input and outputs associated with all or many of the circuits within the first computer. These locations 68 in the first computer (first locations) have values which are determined as a function of the first stream of instructions and the use of these locations is controlled by the direct connections to these locations under control or or in response to the first instruction stream. The accessing of these first locations by means of the redundant connections is under control of the second stream of instructions.

At the same time that the first computer 26 is operating to execute first computer programs, the second computer 27 is executing independently a second program by executing a second stream of instructions. The principal purpose of the second computer 27 is to monitor, control and diagnose the operation of the first computer 26. Frequently the second computer 27 is located in the console of an overall data processing system 1. The second computer 27, for example, monitors error conditions in the first computer 26, supervises the resetting of the first computer 26, and controls the initial program load (IPL) of the first computer 26. The manner in which the second computer 27 interfaces with the first computer 26 is like that described in U.S. Patent 4,244,019.

Each MCC or block 60 of the computer 26 includes a scanner 66, including the scanners 66-1, 66-2, ..., 66-M corresponding to the blocks 60-1, 60-2, ..., 60-M. Each scanner 66 is able under control of the second computer 27, to access first locations within the corresponding block 60 through accessing of the redundant inputs and/or outputs of the circuit locations within the MCC block 60. In this manner, the computer 27 is able to access the circuit locations of the first computer 26 without, in general, interfering with the execution of the first stream of instructions by the first computer 26. Each of the scanners 66 connects to a multiplexer 61 which in turn connects to the second computer 27 and particularly to the core unit 58 of the second computer 27.

The core unit 58 is like the secondary system in the above-identified U.S. Patent 4,244,019.

The second computer 27 and particularly the core unit 58 from time to time experiences errors. Errors in the core unit 58 of the second computer 27 can prevent the second computer 26 from performing some task associated with the first computer 27, thereby interfering with the operation of the first computer 26, and thereby interfering with the primary function of the overall computer system 1, that is, to execute the primary programs in the first computer 26. When the second computer 27 experiences an error condition, one typical operation is to restart the second computer 27 without having the first computer system 26 suspend execution of the primary instruction stream. Such restarting operation of computer 27 avoids or reduces a slow down or avoids the stopping of the operation of the first computer 26 when error conditions are not present in the first computer 26. When the second computer 27 has been stopped, restarting of processing commences typically by an automtic initial program loading (IPL) of the second computer 27 under control of the third computer 28 without need for an initial program load (IPL) of and with a minimum of delays to the first computer 26.

Such automatic operation does not waste the execution time of the first computer 26 and is more efficient for the overall system 1.

In accordance with the present invention, the third computer 28 is interconnected to monitor and control the opertion of the second computer 27 in a manner similar to that in which the second computer 27 monitors and controls the operation of the first computer 26.

In FIG. 2, the second computer 27 includes a scanner 56, which is like the scanners 66 within the first computer 26. The scanner 56 is capable of monitoring redundant data and control inputs and outputs at many locations within the second computer 27.

The computer 27 in FIG. 2 includes a core unit 58 which functions to execute a second stream of instructions independently of the first stream of instructions executed by the first computer 26.

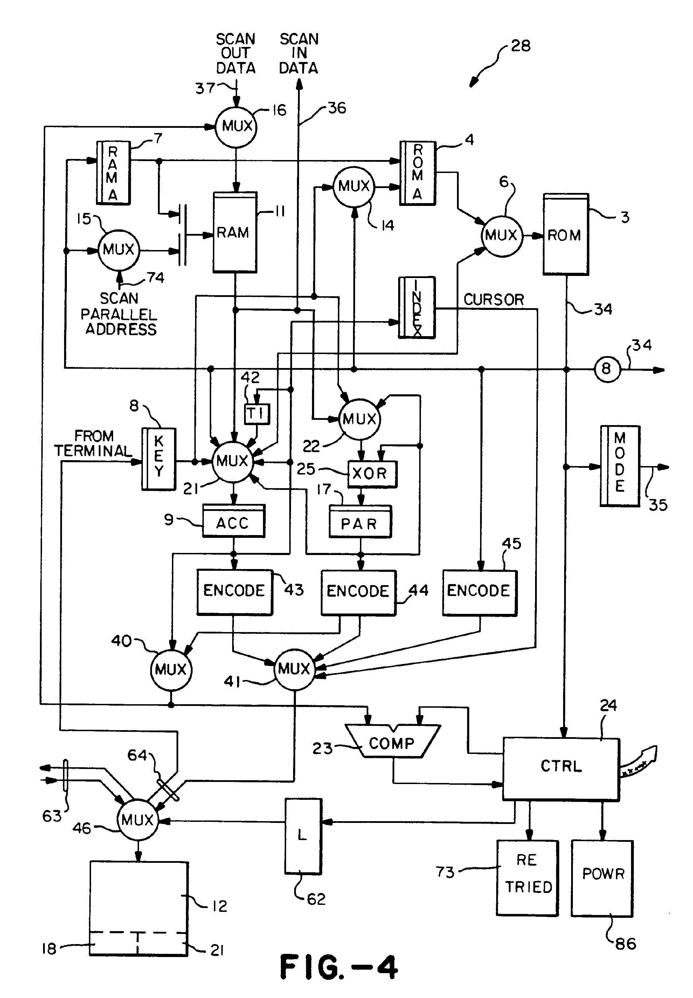

The second computer 27 is physically the equivalent of an MCC block like one of the blocks 60 in the first computer 26. The second computer 27 has many redundantly connected and independently accessible latches and other locations 68 organized in the same manner as the latches of FIG. 4 of the above-identified application entitled "SERIAL CHIP SCAN." That organization of latches 68 is shown in FIG. 4 of the present specification. In FIG. 2, particular ones, latches 51, ..., 55, of the latches 68 of FIG. 4 are shown.

The second computer 27 includes a plurality of error latches 53, including the latches 53-1, ..., 53-N. The error latches 53 store data values of corresponding latches whenever an error has occurred and a corresponding latch or other data point within the second computer system.

Whenever an error occurs within the core unit 58, the error is recorded in one of the latches 53-1 through 53-N. The error latches are independently accessible locations in computer 27 which do not interfere with the normal, error-free functioning of the core unit 58.

The latches 51 through 55 of FIG. 2, corresponding to specific ones of the latches 68 of FIG. 4, are of the type shown in FIG. 6 of the present specification and in FIG. 7 of the above-identified application entitled "SERIAL CHIP SCAN". The latches 68 provide redundant outputs DO2, not utilized in the primary functioning of the second computer 27, and which are accessible under control of the scanner 56 under control of the third computer 28. The above-identified application entitled "SERIAL CHIP SCAN" is hereby incorporated by reference for purposes of explaining the structure and operation of latches having direct and redundant inputs and outputs independently accessible by a scanner controlled in response to the execution of the program in another computer.

In the same manner that scanners are provided in the first computer 26 as described in the above cross-referenced applications, the second computer 27 similarly includes a scanner 56 and error latches 53. The scanner 56, in the second computer 27, is controlled by the third computer 28 of FIG. 1.

In the second computer 27 a clock control 57 is provided. The clock control 57 receives clock signals on lines 70 from the third computer 28. The clock control 57 delivers gated clock signals on lines 71 to the core unit 58 and ungated (free-running) clock signals on the line 72 to the core unit 58. The clock control 57 controls the distribution of and the synchronization of the gated and ungated clock signals on lines 71 and 72 in response to the setting of the gated and ungated latches 54 and 55. Whenever an error condition is detected in one of the latches 53, the error latch 88 is set and detected by clock control 57. In accordance with some predetermined sequence, the distribution of clock signals on lines 71 and 72 to the core unit 58 is controlled in response to an error signal from latch 88 or clock control signals from latches 54 and 55. The manner in which clock control 57, in response to error and other conditions, alters and synchronizes the distribution of clock signals can be carried out in any conventional manner.

In FIG. 2, the latches 51 and 52 store signals directly from the first computer 26 whenever, by operation of the first computer 26, it is determined that the second computer 26 is not functioning properly or for other reasons should be restarted. The first computer 26, under control of the first instruction stream executing in the computer 26, causes either one or both of the latches 51 and 52 to be set. Also, the latch 51 can be set

EP 0 271 986 B1

via the input line 85 under control of the reset switch 75 associated with a the third computer 28. Both of the switches 72 and 75 are operative when the terminal 12 is associated with the third computer 28 under control of the latch 62 of FIG. 4.

Although not explicitly shown in FIG. 2, each of the latches 51 through 55 and 88 includes a reset input from the scanner 56 and are resettable, therefore under control of the scanner 56 in any conventional manner or in the manner described in the above-identified application SERIAL CHIP SCAN. Each of the latches 51 through 55 and 88 of FIG. 2 and more generally each of the latches 68 of FIG. 4 has a predetermined address. That predetermined address renders each of the latches 68 of FIG. 4 accessible by the scanner 56. Furthermore, the address locations of those latches have a predetermined mapping to predetermined addresses in the random access memory (RAM) of the third computer 28. Whenever a scan-out of the latches 51 through 55 and 68 of the second computer 27 occurs by the scanner 56, the state of those latches is recorded in the memory of the third computer 28. Similarly, for a scan-in operation, the contents of memory within the third computer 28 is loaded from the computer 28 through the scanner 56 into the latch and other locations of the second computer 27. All of the scan-in and scan-out operations are under the independent control of the third stream of instructions executed by the third computer 28 and are independent and transparent to the second instruction stream being executed in the second computer 27. Similarly, the second computer 27 is able to scan-in and scan-out latches in other locations in the first computer 26, under control of the second stream of instructions executed by the second computer 27, all independently of the operation of the first stream of instructions in the first computer 26.

Third Computer - FIG. 4.

The third computer (XC) performs, resets and provides debugging capability for the service processor by providing a large subset of service processor functions that can be used on the service processor itself. These include reset, microcode loading and verifying (LMP), display/alter of scanned out latch values (scanpages) and service processor RAMs, clock control and monitoring error conditions.

Further details of the third computer 28 are shown in FIG. 4.

XC ROM. The XC ROM 3 is typically 256K x 8-bit bytes of instruction code and data.

XC ROM ADDRESSING. The ROM address register (ROMA) 4 is used to address instructions in the third instruction stream and the index register 5 is used to address data. A multiplexer 6 selects either the ROMA 4 or index register 5 as the actual ROM address. The index register 5 is only selected during a LIX command. The ROMA 4 is normally incremented after every byte is fetched. The only time it is not is during a branch in which the branch address is loaded from ROM 3 by way of the instruction decode state machine in control 24 and the RAM address register (RAMA) 7 and directly from the ROM 3 data on bus 34 of FIG. 4. It is also not incremented during a BKEY instruction in which the key register 8 is loaded into part of the ROMA register 4. The index register 5 is 19 bits wide and selects a nibble within the addressed byte. The 12-low order bits are incremented by a LIX Instruction and nibbles are transferred between the accumulator 9 and the index register 5 by the LINDX and LDCUR instructions.

XC ROM DATA PATHS. Data from ROM 3 are either XC instructions, branch addresses, data, chip or latch subcommands, or display characters. XC instructions accessed from ROM 3 are decoded by control 24 which also stores the invert mask specified in the PAR, HEX, STOR, CONST, and IF instructions. Branch addresses are stored temporarily in control 24 and the RAMA register 7. ROM data addressed by the index register 5 is loaded via bus 34 and multiplexer 21 into the accumulator 9. Chip subcommands are latched up in the RAMA register 7 and latch subcommands address the XC RAM 11 directly. Display characters are sent to the terminal 12 during a WRITE command.

XC RAM. The XC RAM 11 is organized as a string of 12288 x 1 bits. This string is divided into 192 x 64 bit chip locations, each location corresponding to the number of bits needed to hold an entire scan operation worth of data.

XC RAM ADDRESSING. The chip location is held in the RAM address (RAMA) register 7 which is loaded during chip subcommands. An individual bit (referred to as a latch since normally these bits correspond with the values of latches or other locations in the second computer 27) within the chip location is addressed by a latch subcommand which comes directly from the ROM 3. Since the chip location is latched it is not necessary to specify a chip subcommand for every latch subcommand if the bit is in the same chip location as the previously specified bit. Thus the notation "(chip)|latch subcommand" is used to indicated a latch subcommand in which the chip subcommand is only required if the bit is in a different chip location. The RAM 11 is also addressed by the scanner parallel address which takes the place of the latch address during a scan operation. The multiplexer 15 selects between the ROM data on bus 34 for latch subcommands and the scan parallel address on lines 14 for scan operations.

6

XC RAM DATA PATHS. The RAM 11 input can come from several places. During a scan out operation the data comes from the scanner 56 via scan-out data bus 37. During a STORE or HEX command alter operation, data comes from the accumulator 9 via multiplexer 40. During a PAR command, the data comes from the parity accumulator 17 via encoder 44 and multiplexer 40. Data out of the RAM 11 goes to the scanner 56 via scan-in data bus 36 for scan in operations and to multiplexers 21 and 22 which select data into the accumulator 9 and parity accumulator 17.

ACCUMULATOR. The accumulator 9 is a four bit register which is used to move data from one place to another and to accumulate hex fields for display by the terminal 12. Accumulator 9 can be loaded serially from the RAM 11 during LOAD, HEX or PAR commands in display mode or in parallel from ROM 3 during an INCR instruction. Accumulator 9 is also loaded from the key register 8 in encoded form after a POLL Instruction and at the beginning of a HEX Instruction during alter mode. The accumulator 9 can store bits into the RAM 11 sequentially during STORE, HEX or PAR in alter mode or load the index/cursor register 5, or send hex fields to the terminal 12.

PARITY ACCUMULATOR. The parity accumulator 17 accumulates parity over bits that are moved between RAM 11 and the accumulator during HEX and STORE commands and displays or alters parity during a PAR command. Accumulator 17 is also used as a set/reset flag in conjunction with STORE commands to verify data.

KEY REGISTER. The key register 8 is loaded during a POLL command if a key was pressed on the keyboard 18 of terminal 12. This value can be loaded into the ROMA register 4 to decode a keyboard command or can be encoded and loaded into the accumulator 9. During a POLL command the index register 5 contains the current value of the cursor and is used to move the cursor around when the user presses the arrow keys on the keyboard 18.

## XC instruction set

| OPCODE | DESCRIPTION |
|---|---|
| POLL | Poll terminal and load key register with key value returned from keyboard if a key was pressed. Also sets XC alter/display mode depending on the key pressed. |
| LPAR | Load accumulator bit3 from the parity accumulator. Can be used to get parity of a field but is primarily used during a verify operation to determine whether there was a miscompare. |
| CHART | Write 3278 display character string. All bytes after this command are interpreted to be 3278 characters and will be sent to the display terminal. A byte of x'06' or x'07' will terminate the command. Bytes in the range x'60' to x'7F' are interpreted to be 3278 commands and will be sent as x'00' to x'1F' with the command bit turned on. |
| BKEY | Load ROM address register bits 9-15 with the key register and forces ROM address bits 16, 17 = 0. This is used for decoding keyboard commands. |
| LIX | Load accumulator indexed from ROM. The index register points to either the high order or low order four bits of a ROM location and this nibble is loaded |

into the accumulator. Bits 7-18 of the index register are incremented after the load. This is used for fetching microwords, nanowords, and latch reset values for loading into the service processor.

PAR m
Parity field, followed by one (chip)|latch subcommand. This command will display (as a '*' or ' ') or alter a parity field based on the specified latch modified by the invert bit m, the value of the parity accumulator and, in th case of an alter, the value of the key pressed (space for good parity, 'p' for bad parity).

MODE i/o
Set mode latch to in or out mode. The mode bit determines whether a scan command will do a scan in or a scan out. It is also used to set verify mode (in mode) which causes a store command to do a verify operation instead of a store operation.

LOAD n
Load accumulator with n latch values, n is from one to four. This first clears the accumulator and then shifts in n bits specified by n (chip)|latch subcommand which follow the load command.

LINDX n
Load index register nibble n from accumulator, n is from one to four. The value of n specifies which nibble of the index register gets loaded. Since there are five nibbles in the index

register, the lowest order nibble is loaded from the next lowest.

BRXC adrs          Branch to adrs.

SCAN adrs          Scan adrs. The mode bit determines whether the operation is a scan out or a scan in. The scan operation transfers data between a chip or RAM on the MCC and a chip location in the XC RAM. It then increments the XC RAM address register to point to the next chip location. The address that is specified after the scan command is the scan row and column of the MCC chip.

IF m               If the accumulator is equal to m then do not skip the next three ROM locations else if it is not equal then skip the next three bytes of code. The three bytes of code immediately following the IF command are usually a branch so that the code will look like IF m then BRANCH. If the accumulator is not equal to m then the branch will not occur and execution will continue sequentially.

CONST m            Load accumulator with m.

INCR m             Increment accumulator. The contents of the accumulator are first exclusive ored with m then incremented and loaded back into the accumulator.

LDCUR n            Load accumulator from the cursor register. When n=1-3 the accumulator is

loaded from the corresponding nibble of the cursor register (index register bits 6-17). This is used to save away the cursor value after a poll command so that the index register can be used for other purposes. When n=0 a value based on the index register which indicates the appropriate half-nibble to increment in order to generate a grey coded address is loaded. This is used for generating microstore addresses during microcode loading.

WDD n            Write direct data. This command is used to set certain latches directly. These latches are mostly used to control the display terminal.

STORE n m        Store accumulator bits. When the mode latch is in out mode, this command stores n bits from the accumulator into RAM locations specified by n (chip)|latch subcommands following the store command. The bits are exclusive-ored with the invert mask m before being stored. The parity accumulator accumulates parity over the stored bits. When the mode latch is in in mode, the store command works as above except that instead of storing bits into the RAM, each accumulator bit and its corresponding bit in the RAM are compared and if they are not the same, the parity bit is set. This is used for verifying that the microstore data is correct.

**HEX n m**      **Hex field, followed by n (chip) | latch subcommands. This command displays or alters a hex field made up of bits specified in the latch subcommands after being exclusive ored with the invert mask m. Parity is accumulated over the specified bits. The accumulator shifts bits in from low to high and after the last bit is shifted in, the hex digit is converted to a 3278 character representing the digit and is sent to the display terminal. In alter mode the key register value is converted to a hex nibble and loaded into the accumulator at the beginning of the hex command and the bits are then stored into the RAM during the latch subcommands.**

SCAN instruction

The XC uses a SCAN instruction in the form
        <SCAN opcode><scan address>.
The function of this instruction is unique in that 1) it replaces code that would be required by a general purpose computer, 2) it is used for both input and output depending on a mode bit set by another instruction. A general purpose computer would use at least some separate code for input and output, 3) is independent of the format of the scan data. These conditions mean that the scan protocol can change, but architecturally the XC code does not have to change. A general purpose computer having the scan protocol imbedded in code would have the code change if the scan protocol changed.

HEX instruction

The XC uses HEX instructions of the form
        <HEX n m opcode>
    <(chip)|latch 0 subcommand>..<(chip)|latch n subcommand> where n is the number of latches in the HEX field and m is an invert mask. This instruction is used to display and alter hex fields composed of bits representing latches specified by the latch subcommands following the HEX command. The HEX instruction is unique because 1) It replaces code that would be required on a general purpose computer, 2) It is used for both input and output depending on a mode bit set by another instruction while a general purpose computer must use at least some separate code for input and output, 3) parity over the hex field is accumulated automatically in a parity accumulator. A general purpose computer would accumulate parity separately.

PAR instruction

The XC uses PAR instructions of the form
        <PAR m opcode><(chip)|latch subcommand>
where m is an invert mask for the latch subcommand. The PAR command is used to display and alter the parity

12

value of a field. Field parity comes from the parity accumulator and the parity value is specified by the latch subcommand following the PAR command. The PAR command displays good or bad parity or alters the parity latch to good or bad parity. The PAR Instruction is unique because 1) It replaces code that would be required on a general purpose computer, 2) It is used for both input and output depending on a mode bit set by another instruction while a general purpose computer would use at least some separate code for input and output, 3) The code is independent of the parity accumulation method.

WRITE instruction

The XC uses WRITE(CHART) instructions to send character strings to the display terminal. The format is

<WRITE opcode><3278 character string>

While a general purpose computer does send character strings to a terminal, this function is usually handled by a compiler or other program. The XC is unique in that this function is done at the machine language level.

Hardware Grey Code Logic

The XC loads microcode by grey coding the microstore address instead of incrementing the address. This coding saves time since only one chip needs to be scanned in to change an address instead of many. Since the XC fetches microcode from ROM using the index register and that index register is incremented, there is correlation between the value of the index register and the address in microstore to which this data is to be loaded. Therefore it is possible to determine which chip to update based on the value of the index register. Since each address chip contains two bits of the microstore address, a base four grey code is used as follows: Values are given in base 4.

```
Index   Grey    Index   Grey    Index   Grey    Index   Grey
000     000     020     022     100     130     120     112
001     001     021     023     101     131     121     113
002     002     022     020     102     132     122     110
003     003     023     021     103     133     123     111
010     013     030     031     110     103     130     121
011     010     031     032     111     100     131     122
012     011     032     033     112     101     132     123
013     012     033     030     113     102     133     120
```

The grey code changes only one digit at a time and this digit is determined by the base 4 value. The digit that is changed is selected by the lowest order base 4 digit that is not zero. The logic equations that implement this operation are as follows:

```
In    = Index register digit n (base4)
InH   = Index register high bit of digit n
InL   = Index register low bit of digit n
Gn    = Increment grey code digit n (base4) bit

GAn   = ΛInH & ΛInL
              & GAn-1    This digit=0 and all preceding=0
  Gn  = ΛGAn & GAn-1     Increment this digit if this
                         digit Λ=0 and all preceding=0
```

Alter and display use the same code.

The XC uses the same code for altering and displaying hex and parity fields specified by HEX and PAR instructions. This sharing is an advantage because it saves code and makes the code somewhat independent of the actual display and alter mechanisms.

Alter/display is controlled in the XC by a state machine in control 24 which determines what mode the XC is in. This state machine has four states which are: ROLL, DISPLAY, ALTER SEARCH, and ALTER CHANGE. The POLL state is entered by executing a poll command (opcode = 0). The state machine will poll the terminal for a key and will change state based on the value of the key returned. The state machine in Control 24 recognizes three kinds of keys: cursor (up, down, left, and right arrows), data (0-9, A-F, P, ' ' keys), and command (any other key). If a cursor key is pressed the state machine will move the cursor as indicated and will stay in the POLL state unit either a data or command key is pressed. If a command key is pressed it will enter the DISPLAY state and if a data key is pressed it will enter the ALTER SEARCH state. This operation is what determines the difference between alter and display. In DISPLAY mode, HEX and PAR commands accumulate latch values in a four bit accumulator 9 of FIG. 4 plus parity accumulator 17 of FIG. 4 and display hex or parity fields from these accumulators. In ALTER SEARCH mode, HEX and PAR commands work the same way except that the actual displaying of data is suppressed. In addition there is a function called cursor match which is being done that matches the current cursor location (the location on the screen that was altered) to a particular HEX or PAR command. This operation is called ALTER SEARCH. When the cursor matches the state machine moves to the ALTER UPDATE state. This operation causes the HEX or PAR command to fetch the hex or parity data from the key register 8 which holds the value of the key that was pressed. This value is then stored into the RAM 11 locations specified by that latch subcommands after the HEX or PAR command. Also at this time, a flag is set which causes the parity accumulator to accumulate the difference in parity between the old and new data instead of just the parity of the old data. This flag stays set until the next parity field is encountered at which time the parity bit will be updated with the parity over the new field.

Automatic parity accumulation logic (display and alter).

All parity operations involving a display field are transparent to the code. That is the code should look like this:

```
WRITE ' '              the WRITE command delimits fields
HEX   latch subcommands                    -+
HEX   ....                                  |
   .      as many HEX commands as needed    |  This is a field
   .                                         |
PAR   latch subcommand                     -+
```

DISPLAY -

At the beginning of the field, the WRITE command clers the parity accumulator. During the HEX commands, each latch subcommand will shift a bit into the accumulator 9. Also the parity accumulator 17 will be loaded with that bit exculsive or'ed with the parity accumulator 17 for each bit loaded into the accumulator 9. Parity is not cleared after a HEX command so that parity will be accumulated over multiple HEX commands. When a PAR command is executed, the bit specified in the following latch subcommand is exclusive nor'ed (since we use odd parity) to generate a signal indicating that this field has a good parity (=0) or bad parity (=1). This signal causes either a blank or a parity splat to be sent to the display terminal.

ALTER -

During alter mode, the parity accumulation is affected by four signals: the ALTER SEARCH and ALTER UPDATE signals from the state machine of control 24, HEX START which indicates the beginning of a HEX command, and UPDATE which is a flag set when ALTER UPDATE state is entered. During ALTER SEARCH, the parity accumultor 17 works the same as in display mode. If the XC finds a HEX field which matches the cursor position then it enters ALTER UPDATE. At this point, a hex field is changing and this may change the sense of the parity bit, so difference in parity between the old field and the new field is accumulated. The first thing done is to clear the parity accumulator 17 since any hex fields that came before the one that is altered will not alter the parity (the only field that can alter the parity bit is the current one since it is the only one that is altered). This operation is indicated by ALTER UPDATE & HEX START (ALTER UPDATE is active only during this hex command). During the subsequent latch subcommands, the state machine will go from ALTER UPDATE to ALTER SEARCH but the UPDATE flag which was set at the beginning of the HEX command will say set. This operation indicates to the parity accumulator 17 to accumulate zeroes since no hex field thereafter will affect whether the parity bit needs to be inverted (=1) or not (=0). When the PAR command is encountered with the UPDATE flag on, the PAR command takes the old bit specified by the latch subcommand, exclusive ors it with the parity accumulator and the UPDATE flag so that it will work normally again. Note that any inversion specified in the PAR command has no effect during UPDATE since this is independent of whether the parity needs to be flipped or not.

## Cursor register and tracking logic.

The XC uses hardware to track and move the cursor around on the display terminal in response to cursor keys being pressed. There are two parts to this logic. The first part is the cursor register and its increment/decrement logic and the second part is a state machine which sends the set cursor commands and cursor register values which actually move the cursor on the display terminal.

This function is activated when the XC executes a POLL command and a cursor key is pressed and sent back to the XC during the POLL command. Executing the POLL command causes the terminal state machine to enter the POLL state and when the cursor key is detected three thing happen. First the cursor register is updated based on which cursor key was pressed (On the 3278 terminal the top left hand position corresponds to cursor location x'050'. Cursor positions increment to the right and down to the bottom left position which is x'7CF'). Up arrow will cause 80 to be subtracted from the cursor, down arrow will add 80 to the cursor, left arrow will subtract one, and right arrow will add one. There is also overflow/underflow logic which detects whether the cursor is being moved off the top or bottom of screen and puts the cursor at the current position on the bottom of the screen (e.g. if cursor = x'050' and left arrow is pressed, the cursor will be loaded with x'7CF').

The second thing that happens is that the set cursor state machine is started which sends the set cursor commands along with the updated cursor value to the terminal. The third thing that happens is that the terminal state machine will poll that terminal again and will keep polling until a key other than a cursor key is hit. If a cursor key is hit the cursor register will be updated as in step one above and written out as in step two and will keep polling.

## Index register and Cursor register use same physical latches.

Since the cursor register and the index register are never used at the same time, these two registers can share the same physical register 5. The cursor is only used when the XC is talking to the terminal (either after a cursor key or a data key was pressed) and the index register is only used to load latch or RAM values into the computer 27 which does not require the use of the terminal. The XC code must then load and save the cursor/index register based on what the code is doing. For instance, just before it issues a POLL command, the XC first loads the cursor register with the current cursor value. After the POLL command the XC will save it away until the next POLL or alter needs to be done. At the beginning of the load microcode code, the XC will load the starting ROM address of the microcode into the index register.

## Verify logic so that load and verity use same code.

One of the functions of the XC is to verify that what was scanned into the second computer 27 is the same as is in the XC's ROM. The XC uses logic which modifies the STORE command to do a verify instead of a store. This operation is under the control of a mode bit. The STORE command is followed by from one to four latch subcommands and it stores bits from the accumulator into XC RAM locations corresponding to the latch subcommands. In verify mode it does not store but instead compares the bit in the accumulator with the corresponding bit in the XC RAM and if they are different it sets the parity accumulator. The parity accumulator does not accumulate parity in this mode but instead becomes a set only latch if there is a miscompare.

The code for loading microcode is as follows:

```
Set up index register
...
MODE    out                             put XC in load mode
LIX                                     put microcode in acc.
STORE   MS.bit0,bit1,bit2,bit3          store acc. in XC RAM
...
SCAN    in,MS                           SCAN in microstore
                                        from XC RAM
```

The code for verifying is as follows:

```
set up index register
...
SCAN    in,MS                           SCAN out microstore
...
MODE    in                              put XC in verify mode
LIX                                     put microcode in acc.
STORE   MS.bit0,bit1,bit2,bit3          verify acc with XC RAM
...
LPAR                                    move par acc. to acc.
IF      1                               if 1 then
BRXC    miscompare                      branch to error code
```

The STORE command in verify mode could be made to store the accumulator data as it verified it, but we chose not to so that the bad data would still be in the XC RAM and we would not have to re-fetch it if there was an error.

Hardware parsing of keyboard commands.

The XC uses single key commands. Therefore, the function to be performed is known to hardware since the key value is stored in a key register. This allows the POLL command (which reads the key from the keyboard) to set the terminal state machine to the appropriate state. It also allows the use of a branch on key (BKEY) instruction in conjunction with a branch table to decode commands.

The POLL instruction polls the keyboard and loads the key register with the key value. If the key is a command key the terminal state machine goes to the DISPLAY state and the POLL command returns a value of x'1' in the accumulator. This tells the XC to use the BKEY instruction. If the key is a data key then the terminal state machine is put in ALTER SEARCH mode and a value of x'3' is returned in the accumulator. This causes the XC to do the current display but check to see if it was altered afterwards and do a scan in if so. If a cursor key was pressed the XC hardware handles this and is transparent to the code. If no key was pressed, the POLL command will return zero in the accumulator which indicates to the SC that it should redisplay the last display it did.

Invert mask specified in HEX, STORE, PAR instructions.

The XC needs to specify a latch value as being inverted or not inverted whenever it is used. For instance a scanpage field may specify a latch to be displayed inverted if the logical or physical values of a latch are inverted. Since this operation occurs often we can specifiy an inversion bit for each latch. This operation is done in the HEX, PAR or STORE command instead of the latch subcommands themselves because the command is held in an instruction register through all latch subcommands and it is a simple matter to exclusive-or an invert mask which is part of the command with the corresponding accumulator bit.

Latch addressing using chip and latch subcommands.

Physical latches are not addressed directly by the XC. Instead if a certain latch is required then the entire chip which contains that latch is scanned out into the XC's RAM using a SCAN command to specifiy which chip to scan out. The individual latch can then be accessed by using chip and latch subcommands. They are called subcommands because they always follow either HEX, PAR, LOAD, or STORE commands. The chip subcommands select a 64 bit long location in the XC RAM. The latch subcommands select an individual bit within this 64 bit location. The addresses specified by the chip subcommands do not correspond to the physical scan address of the chip but rather to the order in which the chip was scanned in the list of scan commands. For instance suppose we scan out chips GLU1, GLU2, and GLU3 with physical addresses x'3C', x'33', and x'3B' respectively into RAM chip locations x'00', x'01', and x'02' respectively. If we wanted to load latches x'03' and x'04' of chip GLU2 into the accumulator the code is as follows:

```
loc.    code(hex)
  0     11          LOAD 2 bits into accumulator command
  1     01          chip subcommand (GLU2)
  2     83          latch subcommand (x'03')
  3     84          latch subcommand (x'04')
  4     xx          next command
```

This code shows two things. First a chip subcommand is differentiated from a latch subcommand by the high order bit of the subcommand. This differentiation works because the chip address is seven bits and the latch address is six bits. Second a chip subcommand is not needed for every latch subcommand. Most of the time the next latch specified will be on the same chip as the previous one. The chip address is latched during the chip subcommand and stays the same until the next chip subcommand. Therefore the chip subcommand at location 1 refers to GLU2. Note also that when referring to chip subcommands, actual chips can be referenced even though RAM locations are specified because the mapping of physical chip to RAM location is known.

Scan-in only chips that change logic using start bit flag.

When changing a scan page it is a requirement to scan in only those chips that have actually changed. An automatic method of determining whether a chip has been changed is employed. The automatic method uses a specific bit in the 64 bit chip location in the XC's RAM as a flag to indicate whether this chip location had been modified. This bit, called the start bit because it corresponds to the first bit scanned in or out during a scan operation, is unused by the scanner 56 (the scanner substitutes a hardware generated zero for this bit), is reset by doing a scan-out operation. If this chip is immediately scanned in, the scan in operation will be made a no-op and the chip will not be changed. The assumption here is that since the data that is to be scanned in is exactly the same as that scanned out (This being indicated by the fact that the start bit is reset) and (presumably) the same as the data actually in the chip, there is no need to actually scan-in. If the start bit is set, then an actual scan-in operation would occur.

The conditions for doing an actual scan in (i.e. setting the start bit) occur if a bit in an XC RAM chip location is modified. The only operations that modify XC RAM bits are STORE, HEX, and PAR (HEX and PAR commands act like STORE commands when in update mode). So, therefore, these commands need to set the start bit of the chip location in XC RAM. However, more than one chip location may be modified by a single command if they have chip subcommands which change the current chip. So, therefore, it is the chip subcommand which actually causes the start bit to be set in the new chip location. Note that even if the new data stored is the same as the old data so that the data has actually not changed, the start bit will still be set. Also, since the XC RAM chip location is held between commands, it is necessary to have a chip subcommand before the first latch subcommand even if the chip location does not change so that the start bit for this location will be set. This is really only a problem for HEX and PAR commands and so as a programming rule, we require a chip subcommand as the first subcommand after the HEX or PAR command even if the chip is the current chip.

The start bit is also a convenient bit to choose for this function because when the scan machine is in its idle state, it has the address of the start bit on its parallel address lines. Since these lines go through a mux into the XC RAM address it is only a matter of switching the mux to the scan machine during a chip subcommand to put the correct address into the RAM. Thus this function requires very little logic to implement.

Use RAM address register to temporarily hold ROM branch address.

Since XC ROM addresses are 18 bits wide and the ROM data width is eight bits, it takes three cycles to fetch a complete branch address from the ROM. Therefore, it is necessary to temporarily store part of the branch address (at least 10 bits). The last eight bits fetched can be latched directly into the ROM address register. Two bits can be latched temporarily in the XC's instruction decoding state machine by providing four opcodes for branches. The remaining eight bits need to be latched for one cycle. We chose to use the RAM address register to do this since in the original inception, branch instructions were only needed to move between different algorithms and it did not matter if the contents of the RAM address register were lost. This saves having to add an extra register just for this function and the above restriction still holds true for most XC algorithms. The only problem occurs when we try to index the XC RAM. It is not possible to have a loop in which we do some operation on a chip location then increment the chip location and do this for all chip locations. This is because when we branch back to the top of the loop, the chip location will be destroyed and will have some set value depending on the address of the loop in ROM. This affects algorithms such as the SIC/SOC display in which we want to scan out all chips and display them in raw format. We would like to scan out all chips and then have a loop which increments through all chips using a short piece of code which displays a single chip location. This problem is compounded when multiple chips are involved and there are index values in XC RAM which are on other chips entirely.

Further details specifying the exact logic and the state machine within the control 24 of FIG. 4 are shown in the attached APPENDIX A.

Exemplary details of the first computer 26 and the second computer 27, executing first and second instruction streams, are described in the above-identified U.S. Patent 4,244,019.

In conjunction with any first and second computers of the type described, a third instruction stream which executes in the third computer 28 is shown by way of example in the following TABLE 1.

## TABLE 1

$M_0$   STARTXC

$M_1$   IDLEXC

$M_2$   CTRLXC

$M_{2,1}$   LOAD FEKEY
$M_{2,2}$   IF 1, FEKEY
$M_{2,3}$   BRXC, FEXC

$M_{2,4}$   LOAD RETRIED
$M_{2,5}$   IF 1, RETRIED
$M_{2,6}$   BRXC   ABORTXC

$M_{2,7}$   LOAD ESPSTRT
$M_{2,8}$   IF 1, ESPSTRT
$M_{2,9}$   BRXC, IPLXC

$M_{2,10}$   LOAD CHKSTP
$M_{2,11}$   IF 1, CHKSTP
$M_{2,12}$   BRXC, IPLXC

$M_{2,13}$   BRXC, IDLEXC

$M_3$   FEXC

$M_4$   IPLXC

$M_5$   ABORTXC

In TABLE 1, a typical program is shown which executes in the third computer 28. The function of the program of TABLE 1 is to monitor the operation of the second computer 27 of FIG. 1. The program of TABLE 1 includes a number of macro instructions, $M_0$, $M_1$, $M_2$, ..., $M_5$. Each macro instruction includes a number of instructions which are grouped together to perform certain functions.

The STARTXC macro instruction, $M_0$, functions to do all required initiation functions such as setting the RETRIED latch 86 of FIG. 2 to 0(SETL 0 RETRIED). The $M_0$ macro monitors the START latch 89 which is set by switch 74 and reset by STARTXC after initiation has begun.

The IDLEXC macro instruction, $M_1$, functions to continuously execute in a loop made when the second computer 27 is functioning in an error free, normal mode. When not operating in the normal mode or when other opperations are to be performed by the third computer 28, the program exits the $M_1$ instruction and enters

19

the $M_2$ macro instruction, CTRLXC. The $M_2$ macro instruction includes, for example, a number of test sequences for determining what other macro instruction should be performed when the program is not operating in the idle mode of the $M_1$ instruction.

For example, the instructions $M_{2,1}$, $M_{2,2}$, and $M_{2,3}$ test to determine whether the FEKEY switch 72 of FIG. 1 has been enabled. If so, a branch is taken to the FEXC macro instruction, $M_3$. The $M_3$ macro instruction includes instructions which enable a field engineer to manually and otherwise control the operation of the system 1 of FIG. 1.

In TABLE 1, the instructions $M_{2,4}$, $M_{2,5}$, and $M_{2,6}$ test to determine if the RETRIED latch 73 has been set to a 1. The RETRIED latch 73 is set if an IPL of the second computer 27 has been tried a predetermined number of times, for example, 16 without sucess. If the IPL has not been successful after 16 tries, no further attempt is made at the IPL and the code branches to the ABORTXC macro instruction, $M_5$, which terminates any attemp to automatically restart the second computer 27 without external intervention.

In TABLE 1, the instruction $M_{2,7}$, $M_{2,8}$ and $M_{2,9}$ test the condition of the ESPSTRT latch. The ESPSTRT latch is set to 1 whenever the first computer 26 or some other source has signalled a request that the third computer 28 restart and IPL the second computer 27. If ESPSTRT is set to 1, then the third instruction stream of TABLE 1 branches to the IPLXC macro instruction, $M_4$. The macro instruction $M_4$ includes IPL instructions for clearing, resetting, loading from disk and/or ROM the programs and information necessary to reinitiate operation of the second computer 27.

In TABLE 1, the instructions $M_{2,10}$, $M_{2,11}$, and $M_{2,12}$ test to determine whether or not the gated clocks in the second computer 27 have been stopped and, if so, branch to the macro instruction $M_4$ for a restart IPL of the second computer 27. If none of the branch conditions have been taken prior to the instruction $M_{2,13}$, then the CTRLXC macro terminates by branching to the IDLEXC macro instruction $M_1$. Further details of the macro instruction $M_1$ are described in connection with the following TABLE 2 where the "*" denotes comments that are not part of the code.

## TABLE 2

```
IDLEXC  M     CONST  C
         1,1
    *RELEASE TERMINAL

         M     WDD    1
          1,2
         M     SETL   ,XCSYS0.ESPSTRT,0,IFAIL,0,XCSYXS.CHKSTP,0,
          1,3
               POWR,  1
IDLOOP   M     SCAN   OUT,CLEAR,,CCNT,ERR
          1,4
         M     LDCUR  0
          1,5
         M     STORE  8,XCSYS0.FEKEY,XXXXX,XXXXX,XXXXX
          1,6
         M     IF     0,CCNT.GATD
          1,7
         M     BRXC   IDCHK
          1,8
    *  CHECK POWER-ON LATCH

         M     IF     0,POWR
          1,9
         M     BRXC   IDEND
          1,10
    *  SCAN OUT OR OTHERWISE OBTAIN THE ESP SIGNAL

         M     IF     0,ERR.IPUP,IPDP
          1,11
         M     BRXC   IDLOOP
          1,12


    *  HANDLE THE ESP FLAG BEING SET

         M     SETL   ,XCSYS0.ESPSTRT,1
          1,13
         M     BRXC   IDEND
          1,14
IDCHK    M     SETL   ,XCSYS.CHKSTP,1
          1,15
IDEND    M     SETL   ,XCSYS0.SHIFT,0,IFAIL,1
          1,16
```

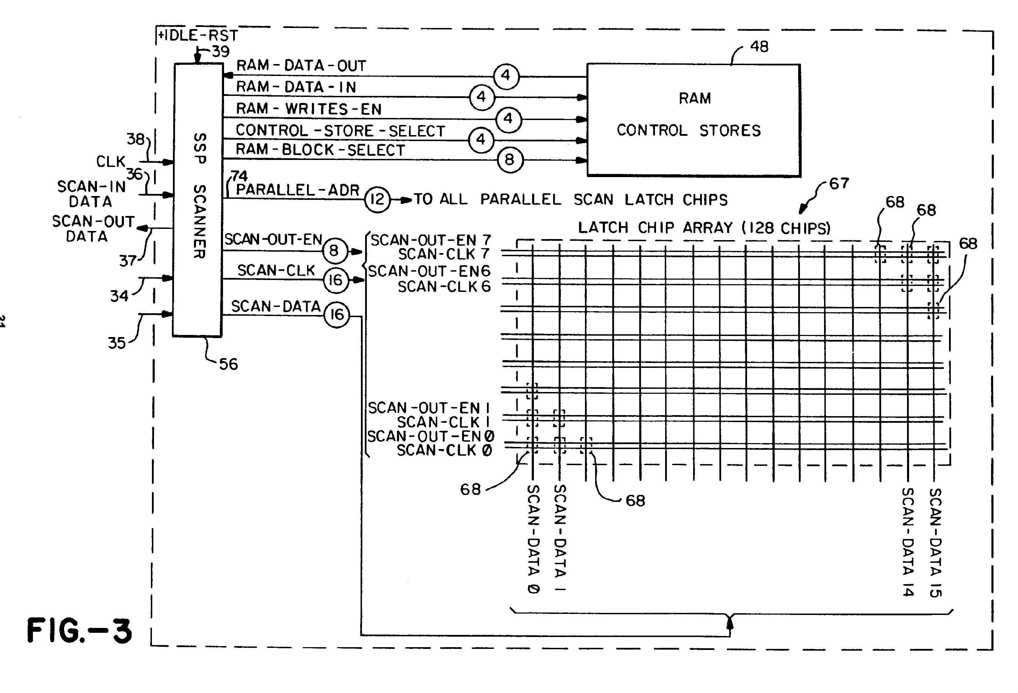

The $M_{1,1}$ instruction CONST loads a constant into the accumulator 9 of FIG. 3 equal to C hex which is the equivalent of decimal 12.

The $M_{1,2}$ instruction WDD functions to write direct data which causes the contents of the accumulator 9 to be written into the state machine of control 24 in FIG. 3. The control 24 receiving WDD1 together with the accumulator contents causes the control 24 to set a latch 62 of FIG. 4 which controls through multiplexer 46 access to the terminals 12. This latch 62, when set, allows the third computer 28 of FIGS. 1 and 4 to gain access to the terminal 12 via lines 64. When the latch 62 is reset, the second computer 27 has access to the terminal 12 via lines 63 and the computer 28 is excluded. After the $M_{1,2}$ instruction of TABLE 1, the computer 27 has access to the terminal 12.

The $M_{1,3}$ instruction SETL is used for setting latches which are defined locations in the RAM 11. These locations in RAM 11 are cleared by the SETL instruction so that they can be used to store information hereinafter described. The ESPSTRT location is used to signify that the computer 26 or some other source has requested that the computer 28 IPL the computer 27. The ESPSTRT location in the RAM 11 corresponds to the latch 51 of FIG. 2. When the state of latch 51 is scanned out by the scanner 56, the 1 or 0 value of latch 51 becomes stored into the ESPSTRT location in RAM 11.

The IFAIL location in RAM 11 is set when any errors occur in computer 27. The IFAIL location is set whenever any one of the history latches, like history latches 51-3 through 53-N in FIG. 2 are set. The IFAIL location in RAM 11 is set when the scanner 56 of FIG. 2 scans out the history latches 53-1 through 53-N.

The CHKSTP location in RAM 11 is set whenever the computer 27 clock as stopped. The CHKSTP location is set when the latch 54 of FIG. 2 is scanned out by the scanner 56.

In the SETL instruction, XCSYS0 corresponds to a chip location and ESPSTRT specifies a latch location on that chip. In the case of IFAIL in the $M_{1,3}$ instruction no chip location has been specified, and hence the same chip location, XCSYS0, is implied as for the previous entry, ESPSTRT. Similarly, XCSYS corresponds to a chip location and CHKSTP corresponds to a latch location on that chip.

The loop, IDLOOP, commences with the $M_{1,4}$ instruction SCAN OUT which scans out the clock control chip (CCNT) 50 and the error chip (ERR) 49. The clock control chip 50 contains the clock latches 54 and 55 and the power-on latch 73, and the retried latch 86, and the error chip 49 contains the error history latches 53 and the IPUP and IPDP latches 51 and 52.

The $M_{1,5}$ instruction LDCUR0 loads the accumulator 9 with values from the keyboard 18 (including the FE key 72) and the $M_{1,6}$ instruction STORE specify four latches including the two latches XCSYS0.FEKEY. The $M_{1,4}$ and $M_{1,5}$ instructions obtain the value of the FEKEY switch 72 from the third computer 28 and sets the latch FEKEY and RAM 11.

The $M_{1,7}$ instruction, IF checks to determine if the state of the gated clock latch is 0, that is, 0,CCNT.GATD.

The $M_{1,8}$ instruction, BRXC, is a branch to IDEND. The two instructions $M_{1,7}$ and $M_{1,8}$ together are read "if CCNT.GATD is equal to 0 then branch to IDCHK." If the gated clocks are off, then the second computer 27 has stopped executing the second instruction steam and the branch is taken to IDCHK.

The $M_{1,9}$ instruction IF has no chip specified and therefore implies the same chip as before, CCNT. The $M_{1,9}$ instruction tests for the power-on latch POWR in RAM 11 to be on, 0,POWR, and then if on, the $M_{1,10}$ instruction branches to IDEND.

The next thing done in the second instruction stream of TABLE 2 is to check the value of the ESP restart signal. This signal comes from the first computer to request the third computer to IPL the second computer. The $M_{1,11}$ instruction determines if either of the latches IPUP and IPDP in RAM 11, which correspond to the ESP restart signals coming from the UP side 26-1 and the DP side 26-2, respectively, of the first computer 26 is 0. If both are 0, then no restart occurs and $M_{1,11}$ instruction branches to IDLOOP which is instruction $M_{1,4}$. If either one of IPUP or IPDP is 1 then a restart of computer 27 is needed and the instruction sequencing falls through to the next instruction, $M_{1,13}$, a set latch instruction which sets the ESP start latch, ESPSTRT, to 1 so as to cause an IPL of the second computer 27 in the TABLE 1 instruction processing. Instruction $M_{1,4}$ branches to IDEND.

The $M_{1,15}$ instruction IDCHK, branched to after determining the value of the gated clock latch as a 0, sets the latch XCSYS. CHKSTP in RAM 11. That latch indicates that the second computer 27 was check stopped, that is, the clocks stopped suddenly. After such an occurrence, a restart and IPL of second computer 27 occurs through the processing of TABLE 1. At IDEND, instruction $M_{1,15}$ sets a latch, SHIFT, representing a shift off and also sets the IFAIL which indicates that error occurred.

## Claims

1. A data processing system comprising,

a general-purpose, programmable first computer (26) constructed from a plurality of first circuits, said first circuits having direct connections for accessing said first circuits in connection with the execution of a first program of instructions, said first circuits having first redundant connections for use in accessing said first circuits independently of said first program of instructions, and said first computer including first scanner means (66) for accessing said first redundant connections,

a programmable second computer (27) constructed from a plurality of second circuits, said second circuits having direct connections for use in the execution of a second program of instructions using selected ones of said second circuits, said second circuits having second redundant connections for accessing said second circuits independently of said second program of instructions, and said second computer including second scanner means (56) for accessing said second redundant connections, said second computer being connected to said first scanner means (66) whereby said second program controls the accessing of said first circuits through said first redundant connections and independently of said first program of instructions,

characterized in that it further comprises

a programmable third computer (28) constructed from a plurality of third circuits, said third computer executing a third program of instructions, said third computer connected to said second scanner means (56) whereby said third computer controls the accessing of said second circuits through said second redundant connections under control of said third program and independently of said second program, said third computer including means for continuously monitoring said second computer to determine if said second computer requires control by said third computer.

2. The apparatus of Claim 1 wherein said second computer (27) includes a restart latch settable by said first computer (26) when said first computer is requesting the restarting of said second computer under control of said third computer (28) and wherein said third computer periodically interrogates said restart latch under control of said third program.

3. The apparatus of Claim 1 wherein said second computer (27) includes an error latch settable by said second computer when said second computer experiences an error and wherein said third computer (28) periodically interrogates said error latch under control of said third program.

4. The apparatus of Claim 1 wherein said second computer (27) includes a power-on latch settable by said second computer when said second computer experiences that the power to said second computer has been off and has come on and wherein said third computer (28) periodically interrogates said power-on latch under control of said third program.

5. The apparatus of Claim 1 wherein said second computer (27) includes a stopped latch settable by said second computer when said second computer has stopped processing said second program of instructions and wherein said third computer periodically interrogates said stopped latch under control of said third program.

6. The apparatus of Claim 1 wherein said third computer (28) includes a retried latch (73) settable by said third computer when said third computer has tried restarting said second computer (27) a predetermined number of times and wherein said third computer periodically interrogates said retried latch under control of said third program.

7. The apparatus of Claim 1 wherein said system includes a terminal (12) having a display and a keyboard (18), includes a multiplexer (46) for connecting said terminal between said second computer and said third computer, includes a terminal latch (62) settable by said third computer for controlling said multiplexer to allocate said terminal to said second or to said third computer, and wherein said third computer sets said terminal latch under control of said third program to allocate said terminal to said third computer when said third computer is operating to restart said second computer.

8. The apparatus of Claim 1 wherein said third computer includes a first memory (3) for storing instructions and includes a second memory (11) for storing scan-out data in locations corresponding to locations scanned- out from said second computer.

9. The apparatus of Claim 8 wherein said first scanner means includes a scanout address data register (33) connected to receive a scanout address in response to said second program and includes scan gates connected to receive information from said first scanner means under control of said second program.

10. The data processing system of Claim 9 wherein said first computer further including,
a plurality of chip carriers each containing an associated plurality of chips and each connected to receive an address bus and connected to provide an input to said scanout means,
means associated with each chip carrier for addressing one of the associated chips in response to information on each address bus,
means on each of said chips responsive to said address bus for addressing a specified one of said selected first circuits on said chip and for connecting said redundant connections of each addressed first circuit to said scanout means.

11. The apparatus of claim 1, wherein said first circuitry provide data locations in normal operation of the first computer where the circuits are formed on chips, scan apparatus on each chip comprising,
sequencer means (16) for performing scan sequences, control logic to control the scan sequence performed by said sequencer means,
data line means selectively connected between an input/output terminal and data locations in said first computer independently from the normal operation of said first computer,

decoder means (31) controlled by said sequencer means to control the selective connection of the data line means to access said locations.

12. The apparatus of Claim 11, wherein said sequencer means includes a counter (32) and includes control logic for controlling the counting of said counter, said counter providing outputs to said decoder means, whereby the decoder controls the selective connection of the data line means.

13. The apparatus of Claim 12, where the circuits providing data locations are latch circuits (67) and where the latch circuits are organized in a plane including rows and columns of said latch circuits, said decoder means having a row decoder for decoding each of the rows in the array and including a column decoder for decoding each of the columns in the array.

14. The apparatus of Claim 13 wherein each of said circuits comprises,
a sample and hold latch circuit (61), having direct connection lines including data-in and data-out lines, including a clock sample input line and including a clock hold input line,
row and column input lines for accessing said latch circuit independently from the direct connection lines,
a scan-out gate (66) enabled by said row and column input lines, providing a scan-out of said latch circuit independently from the direct connection lines.

15. The apparatus of Claim 14, wherein said latch circuit further includes a scan-in line (91) for scanning in data to said latch circuit under control of said row and column input lines.

16. The apparatus of Claim 15 wherein said latch circuit further includes a reset input (99).

17. The system of Claim 1 wherein said third computer includes means for grey coding microstore addresses.

18. The system of Claim 1 wherein said third computer includes means for altering and displaying hex and parity fields specified by HEX and PAR instructions.

19. The system of Claim 1 wherein said third computer includes means for performing parity operations involving display fields which are transparent to the code.

20. The system of Claim 1 wherein said third computer includes means for tracking and moving a cursor.

21. The system of Claim 1 wherein said third computer includes means to verify that data scanned into the second computer is the same as is in the third computer.

22. The system of Claim 1 wherein said third computer includes means (8) for storing a key value in a key register and means to set the terminal state in response to said key value.

23. The system of Claim 1 wherein said third computer includes means for addressing individual latches using chip and latch subcommands.

## Patentansprüche

1. Datenverarbeitungssystem, das umfaßt:
einen universellen, programmierbaren ersten Computer (26), der aus einer Vielzahl erster Schaltungen aufgebaut ist, wobei die ersten Schaltungen direkte Verbindungen zum Zugriff auf die ersten Schaltungen im Zusammenhang mit der Ausführung eines ersten Programms von Befehlen aufweisen, wobei die ersten Schaltungen erste redundante Verbindungen zum Einsatz beim Zugriff auf die ersten Schaltungen unabhängig von dem ersten Programm von Befehlen aufweisen, und wobei der erste Computer eine erste Abfrageeinrichtung (66) zum Zugriff auf die ersten redundanten Verbindungen enthält,
einen programmierbaren zweiten Computer (27), der aus einer Vielzahl zweiter Schaltungen aufgebaut ist, wobei die zweiten Schaltungen direkte Verbindungen zum Einsatz bei der Ausführung eines zweiten Programms von Befehlen unter Verwendung ausgewählter der zweiten Schaltungen aufweisen, wobei die zweiten Schaltungen zweite redundante Verbindungen zum Zugriff auf die zweiten Schaltungen unabhängig von dem zweiten Programm von Befehlen aufweisen, und der zweite Computer eine zweite Abfrageeinrichtung (56) zum Zugriff auf die zweiten redundanten Verbindungen enthält, wobei der zweite Computer mit der ersten Abfrageeinrichtung (66) verbunden ist, wodurch das zweite Programm den Zugriff auf die ersten Schaltungen über die ersten redundanten Verbindungen und unabhängig von dem ersten Programm von Befehlen steuert, **dadurch gekennzeichnet**, daß es des weiteren umfaßt: einen programmierbaren dritten Computer (28), der aus einer Vielzahl dritter Schaltungen aufgebaut ist, wobei der dritte Computer ein drittes Programm von Befehlen ausführt, wobei der dritte Computer mit der zweiten Abfrageeinrichtung (56) verbunden ist, wodurch der dritte Computer den Zugriff auf die zweiten Schaltungen über die zweiten redundanten Verbindungen von dem dritten Programm gesteuert und unabhängig von dem zweiten Programm steuert, wobei der dritte Computer eine Einrichtung zur kontinuierlichen Überwachung des zweiten Computers enthält, die ermittelt, ob Steuerung des zweiten Computers durch den dritten Computer erforderlich ist.

2. Vorrichtung nach Anspruch 1, wobei der zweite Computer (27) einen Wiederanlauf-Zwischenspeicher enthält, der durch den ersten Computer (26) gesetzt werden kann, wenn der erste Computer zum Wiederanlaufen des zweiten Computers von dem dritten Computer (28) gesteuert auffordert, und wobei der dritte Computer von dem dritten Programm gesteuert periodisch den Wiederanlauf-Zwischenspeicher abfragt.

3. Vorrichtung nach Anspruch 1, wobei der zweite Computer (27) einen Fehler-Zwischenspeicher enthält, der durch den zweiten Computer gesetzt werden kann, wenn der zweite Computer einen Fehler feststellt, und wobei der dritte Computer (28) von dem dritten Programm gesteuert periodisch den Fehler-Zwischenspeicher abfragt.

4. Vorrichtung nach Anspruch 1, wobei der zweite Computer (27) einen Einschalt-Zwischenspeicher enthält, der durch den zweiten Computer gesetzt werden kann, wenn der zweite Computer feststellt, daß die Spannung am zweiten Computer abgeschaltet war und eingeschaltet wurde, und wobei der dritte Computer (28) von dem dritten Programm gesteuert periodisch den Einschalt-Zwischenspeicher abfragt.

5. Vorrichtung nach Anspruch 1, wobei der zweite Computer (27) einen Anhalte-Zwischenspeicher enthält, der durch den zweiten Computer gesetzt werden kann, wenn der zweite Computer die Abarbeitung des zweiten Programms von Befehlen angehalten hat, und wobei der dritte Computer von dem dritten Programm gesteuert periodisch den Anhalte-Zwischenspeicher abfragt.

6. Vorrichtung nach Anspruch 1, wobei der dritte Computer (28) einen Wiederhol-Zwischenspeicher (13) enthält, der durch den dritten Computer gesetzt werden kann, wenn der dritte Computer eine vorgegebene Anzahl von Malen versucht hat, das Wiederanlaufen des zweiten Computers (27) zu bewirken, und wobei der dritte Computer von dem dritten Programm gesteuert periodisch den Wiederhol-Zwischenspeicher abfragt.

7. Vorrichtung nach Anspruch 1, wobei das System ein Terminal (12) mit einem Display und einer Tastatur (18) enthält, einen Multiplexer (46) enthält, der das Terminal zwischen den zweiten Computer und den dritten Computer schaltet, einen Terminal-Zwischenspeicher (62) enthält, der durch den dritten Computer gesetzt werden kann, um den Multiplexer so zu steuern, daß er das Terminal dem zweiten oder dem dritten Computer zuordnet, und wobei der dritte Computer von dem dritten Programm gesteuert den Terminal-Zwischenspeicher setzt, so daß das Terminal dem dritten Computer zugeordnet wird, wenn der dritte Computer den Wiederanlauf des zweiten Computers ausführt.

8. Vorrichtung nach Anspruch 1, wobei der dritte Computer einen ersten Speicher (3) zum Speichern von Befehlen enthält und einen zweiten Speicher (11) zum Speichern von Auslesedaten an Speicherplätzen, die aus dem zweiten Computer ausgelesenen Speicherplätzen entsprechen.

9. Vorrichtung nach Anspruch 8, wobei die erste Abfrageeinrichtung ein Ausleseadreßdatenregister (33), enthält, das so angeschlossen ist, daß es in Reaktion auf das zweite Programm eine Ausleseadresse empfängt, und Übergabepunkte enthält, die so angeschlossen sind, daß sie von dem zweiten Programm gesteuert Informationen von der ersten Abfrageeinrichtung empfangen.

10. Datenverarbeitungssystem nach Anspruch 9, wobei der erste Computer des weiteren enthält: eine Vielzahl von Chipträgern, die jeweils eine dazugehörige Vielzahl Chips enthalten und jeweils so angeschlossen sind, daß sie von einem Adressenbus empfangen, und so angeschlossen sind, daß sie eine Eingabe für die Ausleseeinrichtung erzeugen, eine Einrichtung, die zu jedem Chipträger gehört und einen der zugehörigen Chips in Reaktion auf Informationen auf jedem Adressenbus adressiert,

Einrichtungen auf jedem Chip, die auf den Adressenbus ansprechen und eine bestimmte der ausgewählten ersten Schaltungen auf dem Chip adressieren und die redundanten Verbindungen jeder adressierten ersten Schaltung mit der Ausleseeinrichtung verbinden.

11. Vorrichtung nach Anspruch 1, wobei die ersten Schaltungen Datenspeicherplätze im normalen Betrieb des ersten Computers erzeugen, wo die Schaltungen auf Chips ausgeformt sind, wobei Abfragevorrichtungen auf jedem Chip umfassen:

Folgesteuerungseinrichtungen (16), die Abfragefolgen ausführen, Steuerlogikeinrichtungen, die die durch die Folgesteuerungseinrichtungen ausgeführte Abfragefolge steuern,

Datenleitungseinrichtungen, die unabhängig vom normalen Betrieb des ersten Computers wahlweise zwischen einen Eingabe-/Ausgabeanschluß und Datenspeicherplätze in dem ersten Computer geschaltet werden,

Dekodiereinrichtungen (31), die von den Folgesteuerungseinrichtungen gesteuert werden, um die wahlweise Schaltung der Datenleitungseinrichtungen zum Zugriff auf die Speicherplätze zu steuern.

12. Vorrichtung nach Anspruch 11, wobei die Folgesteuerungseinrichtung einen Zähler (32) enthält und eine Steuerlogik enthält, die den Zählvorgang des Zählers steuert, wobei der Zähler Ausgänge an die Dekodiereinrichtung erzeugt, wodurch die Dekodiereinrichtung die wahlweise Schaltung der Datenleitungseinrichtung steuert.

13. Vorrichtung nach Anspruch 12, wobei die Schaltungen, die Datenspeicherplätze bilden, Speicherschaltungen (67) sind, und wobei die Speicherschaltungen in einer Ebene angeordnet sind, die Reihen und Spalten der Speicherschaltungen einschließt, wobei die Dekodiereinrichtung einen Reihendekodierer zum Dekodieren jeder der Reihen in der Anordnung aufweist und einen Spaltendekodierer zum Dekodieren jeder der Spalten in der Anordnung enthält.

14. Vorrichtung nach Anspruch 13, wobei jede der Schaltungen umfaßt:

eine Abtast-und-Halte-Speicherschaltung (61), die direkte Verbindungsleitungen einschließlich Daten-Eingabeund Daten-Ausgabe-Leitungen aufweist, eine Taktabtast-Eingabeleitung enthält, und eine Takthalte-Eingabeleitung enthält,

Reihen- und Spalteneingabeleitungen zum Zugriff auf die Speicherschaltung unabhängig von den direkten Verbindungsleitungen,

ein Auslese-Einrichtung (66), die durch die Reihen- und Spalteneingabeleitungen freigegeben wird, wodurch die Speicherschaltung unabhängig von den direkten Verbindungsleitungen ausgelesen wird.

15. Vorrichtung nach Anspruch 14, wobei die Speicherschaltung des weiteren eine Einleseleitung (91) zum von den Reihen- und Spalteneingabeleitungen gesteuerten Einlesen von Daten in die Speicherschaltung enthält.

16. Vorrichtung nach Anspruch 15, wobei die Speicherschaltung des weiteren einen Rücksetzeingang (99) enthält.

17. System nach Anspruch 1, wobei der dritte Computer eine Einrichtung zum Gray-Codieren von Mikrospeicheradressen enthält.

18. System nach Anspruch 1, wobei der dritte Computer eine Einrichtung zum Ändern und Anzeigen von Hexadezimal- und Paritätsfeldern enthält, die durch HEX- und PAR-Befehle bestimmt werden.

19. System nach Anspruch 1, wobei der dritte Computer eine Einrichtung zum Ausführen von Paritätsoperationen einschließlich Anzeigefelder enthält, auf die der Code zugreifen kann.

20. System nach Anspruch 1, wobei der dritte Computer eine Einrichtung zum Verfolgen und Bewegen eines Cursors enthält.

21. System nach Anspruch 1, wobei der dritte Computer eine Einrichtung enthält, die überprüft, ob die in den zweiten Computer eingelesenen Daten die gleichen sind wie die in dem dritten Computer.

22. System nach Anspruch 1, wobei der dritte Computer eine Einrichtung (8) zum Speichern eines Tastenwertes in einem Tastenregister sowie eine Einrichtung enthält, die den Zustand des Terminals in Reaktion auf den Tastenwert einstellt.

23. System nach Anspruch 1, wobei der dritte Computer eine Einrichtung zum Adressieren einzelner Zwischenspeicher unter Verwendung von Chip- und Zwischenspeicherunterbebefehlen enthält.

## Revendications

1. Système de traitement de données comprenant :

un premier ordinateur programmable à usage général (26) construit à partir d'une pluralité de premiers circuits, lesdits premiers circuits comportant des connexions directes pour accéder auxdits premiers circuits en relation avec l'exécution d'un premier programme d'instructions, lesdits premiers circuits comportant des premières connexions redondantes destinées à être utilisées pour accéder auxdits premiers circuits indépendamment dudit premier programme d'instructions et ledit premier ordinateur incluant un premier moyen d'analyseur (66) pour accéder auxdites premières connexions redondantes ;

un second ordinateur programmable (27) construit à partir d'une pluralité de seconds circuits, lesdits seconds circuits comportant des connexions directes destinées à être utilisées lors de l'exécution d'un second programme d'instructions qui utilise certains sélectionnés desdits seconds circuits, lesdits seconds circuits comportant des secondes connexions de redondance permettant d'accéder auxdits seconds circuits indépendamment dudit second programme d'instructions et ledit second ordinateur incluant un second moyen d'analyseur (56) pour accéder auxdites secondes connexions redondantes, ledit second ordinateur étant connecté audit premier moyen d'analyseur (66) d'où il résulte que ledit second programme commande l'accès auxdits premiers circuits par l'intermédiaire desdites premières connexions redondantes et indépendamment dudit premier programme d'instructions,

caractérisé en ce qu'il comprend en outre :

un troisième ordinateur programmable (28) construit à partir d'une pluralité de troisièmes circuits, ledit troisième ordinateur exécutant un troisième programme d'instructions, ledit troisième ordinateur étant connecté audit second moyen d'analyseur (56) d'où il résulte que ledit troisième ordinateur commande l'accès auxdits seconds circuits par l'intermédiaire desdites secondes connexions redondantes sous la commande dudit troisième programme et indépendamment dudit second programme, ledit troisième ordinateur incluant un moyen pour surveiller en continu ledit second ordinateur afin de déterminer si ledit second ordinateur nécessite une commande par ledit troisième ordinateur.

2. Appareil selon la revendication 1, dans lequel ledit second ordinateur (27) inclut une bascule de redémarrage qui peut être établie par ledit premier ordinateur (26) lorsque ledit premier ordinateur reçoit requête de redémarrer ledit second ordinateur sous la commande dudit troisième ordinateur (28) et dans lequel ledit troisième ordinateur interroge périodiquement ladite bascule de redémarrage sous la commande dudit troisième programme.

3. Appareil selon la revendication 1, dans lequel ledit second ordinateur (27) inclut une bascule d'erreur qui peut être établie par ledit second ordinateur lorsque ledit second ordinateur subit une erreur et dans lequel ledit troisième ordinateur (28) interroge périodiquement ladite bascule d'erreur sous la commande dudit troisième programme.

4. Appareil selon la revendication 1, dans lequel ledit second ordinateur (27) inclut une bascule de mise en marche qui peut être établie par ledit second ordinateur lorsque ledit second ordinateur est soumis au fait que l'alimentation appliquée audit second ordinateur a été coupée et a été établie et dans lequel ledit troisième ordinateur (28) interroge périodiquement ladite bascule de mise en marche sous la commande dudit troisième programme.

5. Appareil selon la revendication 1, dans lequel ledit second ordinateur (27) inclut une bascule arrêtée qui peut être établie par ledit second ordinateur lorsque ledit second ordinateur a arrêté le traitement dudit second programme d'instructions et dans lequel ledit troisième ordinateur interroge périodiquement ladite bascule arrêtée sous la commande dudit troisième programme.

6. Appareil selon la revendication 1, dans lequel ledit troisième ordinateur (28) inclut une bascule de retentative (13) qui peut être établie par ledit troisième ordinateur lorsque ledit troisième ordinateur a essayé de redémarrer ledit second ordinateur (27) un nombre prédéterminé de fois et dans lequel ledit troisième ordinateur interroge périodiquement ladite bascule de retentative sous la commande dudit troisième programme.

**7.** Appareil selon la revendication 1, dans lequel ledit système inclut un terminal (12) comportant un affichage et un clavier (18), inclut un multiplexeur (46) pour connecter ledit terminal entre ledit second ordinateur et ledit troisième ordinateur, inclut une bascule de terminal (62) qui peut être établie par ledit troisième ordinateur pour commander ledit multiplexeur afin d'allouer ledit terminal audit second ou audit troisième ordinateur et dans lequel ledit troisième ordinateur établit ladite bascule de terminal sous la commande dudit troisième programme pour allouer ledit terminal audit troisième ordinateur lorsque ledit troisième ordinateur fonctionne pour redémarrer ledit second ordinateur.

**8.** Appareil selon la revendication 1, dans lequel ledit troisième ordinateur inclut une première mémoire (3) pour stocker des instructions et inclut une seconde mémoire (11) pour stocker des données de sortie par balayage en des emplacements correspondant à des emplacements sortis par balayage depuis ledit second ordinateur.

**9.** Appareil selon la revendication 8, dans lequel ledit premier moyen d'analyseur inclut un registre de données d'adresse de sortie par balayage (33) connecté pour recevoir une adresse de sortie par balayage en réponse audit second programme et inclut des portes de balayage connectées pour recevoir une information dudit premier moyen d'analyseur sous la commande dudit second programme.

**10.** Système de traitement de données selon la revendication 9, dans lequel ledit premier ordinateur inclut en outre :

une pluralité de supports de puce dont chacun contient une pluralité associée de puces et dont chacun est connecté pour recevoir un bus d'adresse et est connecté pour produire une entrée pour ledit moyen de sortie par balayage ;

un moyen associé à chaque support de puce pour adresser l'une des puces associées en réponse à une information sur chaque bus d'adresse ;

un moyen, sur chacune desdites puces, sensible audit bus d'adresse pour adresser l'un spécifié desdits premiers circuits choisis sur ladite puce et pour connecter lesdites connexions redondantes de chaque premier circuit adressé audit moyen de sortie par balayage.

**11.** Appareil selon la revendication 1, dans lequel ledit premier circuit fournit des emplacements de données lors du fonctionnement normal du premier ordinateur dans lequel les circuits sont formés sur des puces, un appareil de balayage sur chaque puce comprenant :

un moyen de séquenceur (16) pour réaliser des séquences de balayage, une logique de commande pour commander la séquence de balayage réalisée par ledit moyen de séquenceur ;

un moyen de ligne de données connecté sélectivement entre une borne d'entrée/sortie et des emplacements de données dans ledit premier ordinateur indépendamment du fonctionnement normal dudit premier ordinateur ;

un moyen de décodeur (31) commandé par ledit moyen de séquenceur pour commander la connexion sélective du moyen de ligne de données pour accéder auxdits emplacements.

**12.** Appareil selon la revendication 11, dans lequel ledit moyen de séquenceur inclut un compteur (32) et inclut une logique de commande pour commander le comptage dudit compteur, ledit compteur produisant des sorties pour ledit moyen de décodeur d'où il résulte que le décodeur commande la connexion sélective du moyen de ligne de données.

**13.** Appareil selon la revendication 12, dans lequel les circuits fournissant des emplacements de données sont des circuits de bascule (67) et dans lequel les circuits de bascule sont organisés selon un plan incluant des rangées et des colonnes desdits circuits de bascule, ledit moyen de décodeur comportant un décodeur de rangée pour décoder chacune des rangées du réseau et comportant un décodeur de colonne pour décoder chacune des colonnes du réseau.

**14.** Appareil selon la revendication 13, dans lequel chacun desdits circuits comprend :

un circuit de bascule échantillonneur/bloqueur (61) comportant des lignes de connexion directe incluant des lignes d'entrée de données et des lignes de sortie de données, incluant une ligne d'entrée d'échantillon d'horloge et incluant une ligne d'entrée de blocage d'horloge ;

des lignes d'entrée de rangée et de colonne pour accéder audit circuit de bascule indépendamment des lignes de connexion directe ; et

une porte de sortie par balayage (66) validée par lesdites lignes d'entrée de rangée et de colonne, produisant une sortie par balayage dudit circuit de bascule indépendamment des lignes de connexion directe.

15. Appareil selon la revendication 14, dans lequel ledit circuit de bascule inclut en outre une ligne d'entrée par balayage (51) pour balayer des données d'entrée sur ledit circuit de bascule sous la commande desdites lignes d'entrée de rangée et de colonne.

16. Appareil selon la revendication 15, dans lequel ledit circuit de bascule inclut en outre une entrée de remise à l'état initial (99).

17. Système selon la revendication 1, dans lequel ledit troisième ordinateur inclut un moyen pour coder selon un code Grey des adresses de micromémoire.

18. Système selon la revendication 1, dans lequel ledit troisième ordinateur inclut un moyen pour altérer et afficher des champs hexadécimaux et de parité spécifiés par des instructions HEX et PAR.

19. Système selon la revendication 1, dans lequel ledit troisième ordinateur inclut un moyen pour réaliser des opérations de parité mettant en jeu des champs d'affichage qui sont transparents au code.

20. Système selon la revendication 1, dans lequel ledit troisième ordinateur inclut un moyen pour suivre et déplacer un curseur.

21. Système selon la revendication 1, dans lequel ledit troisième ordinateur inclut un moyen pour vérifier que des données balayées dans le second ordinateur sont les mêmes que dans le troisième ordinateur.

22. Système selon la revendication 1, dans lequel ledit troisième ordinateur inclut un moyen (8) pour stocker une valeur clé dans un registre de clé et un moyen pour établir l'état du terminal en réponse à ladite valeur clé.

23. Système selon la revendication 1, dans lequel ledit troisième ordinateur inclut un moyen pour adresser des bascules individuelles en utilisant des sous-commandes de puce et de bascule.

EP 0 271 986 B1

FIG.-1

FIG.-2

FIG.-6

30

FIG.-3

FIG.—4

FIG.-5